# EUROPEAN PATENT APPLICATION

(11) **EP 4 477 682 A1**
(43) Date of publication of application: **18.12.2024**
(21) Application number: 23178671.6
(22) Date of filing: 12.06.2023
(51) Int. Cl.: C08F 265/06, C08J 5/18, C08F 220/14

(54) **IMPROVED PROCESS FOR PRODUCING POLYALKYL(METH)ACRYLATE SEMI-FINISHED PRODUCTS INCLUDING PARTICULATE ADDITIVES**

(71) Applicant: POLYVANTIS GmbH, 64331 Weiterstadt (DE)
(72) Inventor: MUECK, Oliver, 65462 Ginsheim-Gustavsburg (DE); KRIER, Claudia, 64319 Pfungstadt (DE); HELLER, Marian, 64283 Darmstadt (DE)
(74) Representative: Ellwanger, Arndt

(57) **Abstract**

The present invention relates to a process for producing polyalkyl(meth)acrylate semi-finished products, preferably polymethylmethacrylate (PMMA) semi-finished products, such as sheets and blocks, via a casting process, wherein particulate additives, such as particulate infrared absorber (IR absorber), are homogenously dispersed in the first reaction mixture comprising the alkyl (meth)acrylate monomers. The inventive process allows a homogenous dispersion of the particulate additive in the polymer matrix and high transparency of the semi-finished product. Further, the invention is directed to the semi-finished products obtained by the inventive process.

## Description

### Field of the invention

The present invention relates to a process for producing polyalkyl(meth)acrylate semi-finished products, preferably polymethylmethacrylate (PMMA) semi-finished products, such as sheets and blocks, via a casting process, wherein particulate additives, such as particulate infrared absorber (IR absorber), are homogenously dispersed in the first reaction mixture comprising the alkyl (meth)acrylate monomers. The inventive process allows a homogenous dispersion of the particulate additive in the polymer matrix and high transparency of the semi-finished product. Further, the invention is directed to the semi-finished products obtained by the inventive process.

In particular, the present invention is directed to a process for producing heat absorbing semi-finished products comprising at least one particulate infrared absorber (IR absorber), such as nanoparticles of caesium tungsten bronze, wherein the particulate IR absorber is homogenously incorporated into the polymer matrix, preferably into a polymethylmethacrylate (PMMA) matrix. Said heat absorbing semi-finished products are preferably used for producing automotive glazing, rail vehicle glazing, aircraft glazing or architectural glazing.

### Prior art

Polymethylmethacrylate (PMMA) has excellent optical properties, such as high transparency, and a high weathering resistance and is therefore particularly suitable for various outdoor applications. Further, PMMA exhibit high potential for weight savings in several application, such as replacing inorganic glass in glazing applications for the automotive and aircraft sector. In line with this, PMMA is mainly used in medical technology, construction, automotive and aviation industries. Generally, the thermoplastic polymer PMMA can be formed into semi-finished products by extrusion or casting processes (also referred to as cell casting or chamber casting). As a rule, higher molecular weight, e.g. over several million g/mol, can be achieved via the casting process. Compared to extruded semi-finished products, cast PMMA sheets are characterized by a higher surface quality and higher mechanical strength. In contrast to extrusion or injection moulding, the polymer may be crosslinked three-dimensionally in a casting process, e.g. by addition of a crosslinker. Often casted semi-finished products, such as sheets, are further processed via forming machine process, such as bend-forming, pressure forming or thermoforming processes.

The casting process is based on the principle of chamber polymerization, wherein a pre-polymerized syrup of (meth)acylate monomers is casted into the desired shape, represented by the reaction chamber, and then polymerized. Often the reaction chamber is build up by glass sheets which usually form the base and the ceiling of the chamber and which are sealed at the sides using suitable measures, for example sealing strips or tapes. Often the pre-polymerized syrup is prepared in a reaction vessel, e.g. a stirred tank reactor, wherein the reaction mixture is a obtained by mixing the (meth)acylate monomers, preferably mainly based on methyl methacrylate , with initiator, regulator and optionally further additives, such as colour pigments, radical scavengers, IR absorbers. Often the polymerization is stopped, e.g. by addition of a polymerization inhibitor and/or cooling, before the pre-polymerized syrup is filed into the reaction chamber. Such casting process for producing PMMA sheets or blocks are for example described in DE 29 41 959 A1, DE 632 951, DE 19 832 018 and WO 2005/049666.

PMMA sheets for glazing having highest quality and strength, in particular for the aviation sector, such as cockpit glazing, are typically produced using the casting process, often including three-dimensionally crosslinking during the casting process and subsequent biaxial stretching of the of the semi-finished product (e.g. WO 2013/023867 and US 2009/0093578 A1). General properties of PMMA and crosslinking of PMMA are for example described in Ali et al., Polymer Reviews, Vol. 55, Nr. 4, p. 678-705, 2015, "A Review of the Properties and Applications of Poly (Methyl Methacrylate) (PMMA)". Basic requirements for materials for cast acrylic glazing in the aviation sector are also described in the draft standards DIN EN 4364 and DIN EN 4366.

It is often desired to reduce the UV and/or IR radiation passing through such transparent acrylic glazing in automotive or aviation sector, in order to safe occupants and avoid heating of the interior of the vehicle or airplane. This is typically effected by incorporating UV and/or IR absorbers into the acrylic glazing itself and/or to add IR absorbing films or coatings onto the glazing.

Often the incorporation of particulate additives, such as IR absorber or UV stabilizers, into a polymer matrix impairs the mechanical properties, such as impact strength as well as optical properties, transmission, transparency and colour, of the polymer. Often the agglomeration and coagulation of said particulate additives have to be avoided or reduced. Several method are described in the state of the art to advantageously incorporate particulate additives, such as IR absorber or UV stabilizers, or pigments, into a polymer matrix.

For example, WO 2011/141365 A1 describes stabilizers compositions comprising IR absorbers and their use in automotive glazing made of transparent thermoplastic compositions, particularly based on polycarbonate.

US 2009/0093578 A1 describes the incorporation of an perylene based dye and/or hexaboride based nanoparticles as IR absorbers into transparent stretched acrylic sheets. DE 10 2005 056 622 A describes specific silica modified zinc oxide nanoparticles and their use as UV stabilizers in several polymers, e.g. PMMA. US 7,759,414 B describes a process of incorporating IR absorbing inorganic nanoparticles, such as antimony tin oxide, indium tin oxide or lanthanum hexaboride into interlayer materials for glass laminated products, such as safety glass, wherein a nanoparticle concentrate comprising the particulate IR absorber and a ethylenic acid copolymer is incorporated into the polymer matrix of a film or sheet.

DE 101 17 785 A1 is directed to heat absorbing multi-layer system that can be used as heat insulation of transparent polymer based glazing, e.g. based on polycarbonate. This multi-layer system is composed of a first layer comprising at least on organic IR absorber and at least on UV absorber and a second layer comprising at least on UV absorber. The IR absorber and/or the UV absorber are incorporated into the different layers, based for example on polycarbonate, by compounding, coextrusion, kneading, or mixing during injection moulding.

Inorganic particulate IR absorbers, such as commonly known IR absorbers based on metal oxides or hexaboride compounds, are often superior to organic IR absorbers due to their higher stability and IR absorption. However, it has emerged that such particulate IR absorbers often cause undesirable increase of haze of the glazing due to incompatibility with the PMMA matrix and coagulation of particles.

### Object of the invention

In view of the above, one object addressed by the present invention was provision of a process that allows to incorporate different particulate additives into a polyalkyl(meth)acrylate matrix, preferably a PMMA matrix, via a casting process, wherein the particulate additive is homogenously dispersed in the polymer matrix and does not impair the optical properties of the casted product, such as haze.

Further, one object of the invention is to provide an improved casting process for producing PMMA sheets, for example suitable for use as glazing in aviation sector, wherein an particulate IR absorber is homogenously incorporated into the PMMA matrix and the casted product shall exhibit high transparency (i.e. low haze) and high IR absorption, preferably in the near IR range.

Additionally, it should be possible to carry out the process easily, cost-effective and using commonly known casting technique and devices. Further, it should be possible to use commonly known and commercially available particulate additives without the need of specific and/or expensive modification.

Generally, it is not possible to obtain semi-finished products having high transparency using particulate additives, such as IR absorbers on basis of caesium tungsten bronze, in a state of the art casting process wherein the particulate additive, typically available in form of a dispersion or masterbatch, is added to the prepolymer composition. When the particulate additive, e.g. the particulate IR absorber, is added in the casting process, already a slight turbidity of the polymerization mixture can be seen during casting proceeding, which makes the sheets unusable for use as glazing material, e.g. cockpit glazing in aviation sector. In case of crosslinked sheets, subsequent heating in the tempering oven and/or subsequent stretching of the sheet led to an opaque deposition on sheet surface. It can be assumed that this turbidity of the polymerization mixture and the opaque deposition was caused by agglomeration of the additive particles with the prepolymer and/or an interaction of the crosslinker and the IR absorber.

### Summary of the invention

It was surprisingly found that particulate additives, such as a particulate IR absorber based on caesium tungsten bronze, can be advantageously incorporated into a semi-finished product based on polyalkyl(meth)acrylate, preferably PMMA casted sheets, via a casting process when a prepolymer composition is prepared by in situ polymerisation of (meth)acrylate monomers in the presence of the particulate additive, e.g. the caesium tungsten bronze. Further it was found that such prepolymer composition, comprising the particulate additive, can advantageously be used as a masterbatch in subsequent polymerisation stage.

The semi-finished products produced by the inventive process showed excellent optical properties, such as hight transparency in the visible spectral range; good efficacy of the particulate additive, e.g. high absorption in the IR spectra range; as well as good mechanical properties. Further, it was found that crosslinked semi-finished products, preferably crosslinked PMMA casted sheets, can be obtained that do not show any unwanted properties in subsequent processing of the semi-finished product, such as deposition and increased opacity after stretching. It was surprisingly found that particulate additives can be incorporated into the polymer matrix of the semi-finished products homogenously and without agglomeration so that haze values below 1.5 %, preferably below 1.0 % (measured on a sheet having thickness of 3 mm) can be achieved. In case of particulate IR absorbers, the IR absorption at 1000 nm of 40 % or more (measured on a sheet having thickness of 3 mm) can be achieved

Without bound to theory, it is assumed, that the inventive process led to homogenous distribution of the particulate additive, e.g. the particulate IR absorber based on caesium tungsten bronze, in the polymer matrix without forming particle agglomerates, as the alkyl (meth)acrylate monomer is partly adsorbed on the surface of the additive particle and polymer chains growing from particle surface are adsorbed on the particle surface, which effects stabilization of the particles in the prepolymer and sterically effects avoid agglomeration of particles.

The present invention is directed to a process for producing a semi-finished product based on polyalkyl(meth)acrylate (also referred to as "polyalkyl(meth)acrylate semi-finished product" in the following), preferably based on polymethylmethacrylate (PMMA), comprising
a. first polymerization stage, wherein a first reaction mixture M1 comprising
   i. at least one alkyl (meth)acrylate, preferably including methyl methacrylate , and optionally at least one co-polymerizable monomer;
   ii. at least one particulate additive, wherein the particulate additive is dispersed in the first reaction mixture M1;
   iii. at least one radical initiator; and
   iv. optional additional additives;
   is polymerized;
b. stopping polymerisation reaction of first polymerization stage, preferably by cooling the reaction mixture and/or by adding at least one polymerisation inhibitor to the reaction mixture M1, wherein a prepolymer composition Z1 is obtained;
c. second polymerization stage, wherein a second reaction mixture M2 comprising
   i. the prepolymer composition Z1 obtained in step b,
   ii. at least one initiator; and
   iii. optionally at least one additional monomer component, selected from additional monomers and/or additional prepolymer compositions Z2, and
   iv. optional additional additives;
   is polymerised in a predefined form, wherein the semi-finished product based on polyalkyl(meth)acrylate is obtained.

Typically, the inventive process is based on a commonly known casting process for producing polyalkyl(meth)acrylate semi-finished products, preferably PMMA semi-finished products, such as sheets, blocks, and films.

The term "(meth)acrylate" as used herein is meant to encompass meth acrylates, acrylates and mixtures thereof.

### Detailed description of the invention

### Polyalkyl(meth)acrylate semi-finished products

Polyalkyl(meth)acrylates are usually obtained by free-radical polymerization of mixtures which typically comprise one or more alkyl (meth)acrylates, wherein the alkyl (meth)acrylates preferably include methyl methacrylate (MMA) and often at least one further C1-C6 alkyl (meth)acrylate different from MMA. Preferably, these mixtures comprise at least 50 wt.-%, preferably at least 60 wt.-%, particularly preferably at least 80 wt.-%, and even more preferably at least 90 wt.-%, based on the weight of the monomers, of methyl methacrylate. Preferably, the amount of methyl methacrylate in this mixtures is from 50.0 wt.-% to 99.9 wt.-%, preferably from 80.0 wt.-% to 99.0 wt.-% and particularly preferably from 90.0 wt.-% to 99.0 wt.-%, based on the weight of monomers.

According to a preferred embodiment of the present invention the semi-finished product is based on polymethylmethacrylate, which is typically build up by at least 50 wt.-%, preferably at least 60 wt.-%, particularly preferably at least 80 wt.-%, and even more preferably at least 90 wt.-%, based on the polymethylmethacrylate, of methyl methacrylate (MMA) monomer units. Optionally, the polymethylmethacrylate may comprise other monomer units as described below.

More preferably, the present invention is directed to a process for producing a semi-finished product based on polymethylmethacrylate wherein the polymethylmethacrylate is typically build up by at least 80 wt.-%, preferably at least 90 wt.-%, based on the polymethylmethacrylate, of methyl methacrylate (MMA) monomer units, and the polymethylmethacrylate has a weigh average molecular mass M_{w} of at least 750.000 g/mol.

Preferably, the polyalkyl(meth)acrylate semi-finished products of the present invention comprises from 30.0 wt.-% to 99.999 wt.-%, preferably from 50.0 wt.-% to 99.99 wt.-%, more preferably from 90.0 wt.-% to 99.9 wt.-%, of the polyalkyl(meth)acrylate, preferably of polymethylmethacrylate, and from 0.0001 wt.-% to 5.0 wt.-%, preferably 0.001 wt.-% to 2.0 wt.-%, more preferably 0.002 wt.-% to 1.0 wt.-% of the at least one particulate additive, preferably of at least one IR absorber as particulate additive, more preferably at least one IR absorber selected from caesium tungsten bronzes CsₓWO₃ with x is from 0.001 to 1.000, each based on the total weight of the semi-finished product. In case that the particulate additive, e.g. the IR absorber, is used as a formulation, such as a dispersion or a masterbatch, the amount of particulate additive, e.g. of the IR absorber, is calculated based on the solid content or content of active substance in the formulation unless otherwise stated.

More preferably, the polyalkyl(meth)acrylate semi-finished products of the present invention comprises, each based on the total weight of the semi-finished product, from 30.0 wt.-% to 99.999 wt.-%, preferably from 50.0 wt.-% to 99.99 wt.-%, more preferably from 90.0 wt.-% to 99.999 wt.-%, of the polyalkyl(meth)acrylate, preferably of the polymethylmethacrylate, and from 0.001 wt.-% to 2.0 wt.-%, preferably 0.01 wt.-% to 2.0 wt.-%, more preferably 0.01 wt.-% to 0.5 wt.-% of at least one IR absorber as particulate additive, selected from caesium tungsten bronzes CsₓWO₃ with x is from 0.001 to 1.000 and calculated based on the solid content of the caesium tungsten bronze.

The polyalkyl(meth)acrylate semi-finished products produced by the inventive process are preferably in the form of sheets, blocks, rods, profiles, films, preferably in the form of sheets. In a preferred embodiment the polyalkyl(meth)acrylate semi-finished product is selected from sheets having a thickness in the range of from 1.5 mm to 100 mm, preferred from 2 mm to 80 mm, more preferred from 5 to 55 mm. Also preferably, the sheet may have a thickness in the range of 2 mm to 30 mm, more preferred 2 to 20 mm.

### First polymerization stage (step a)

The first polymerization stage (step a) of the inventive process encompasses polymerization of the first reaction mixture M1, wherein the first reaction mixture M1 comprises:
i. at least one alkyl (meth)acrylate, preferably selected from C1-C12 alkyl (meth)acrylates and preferably including methyl methacrylate (MMA), and optionally at least one co-polymerizable monomer;
ii. at least one particulate additive, wherein the particulate additive is dispersed in the first reaction mixture M1,
iii. at least one radical initiator, and
iv. optional additional additives.

The polymerization of the first reaction mixture is typically carried out up to a conversion rate of at least 20 wt.-% of the monomers used in the first polymerization stage. Typically, the viscosity of the reaction mixture obtained in the first polymerisation stage and/or the viscosity of the prepolymer composition Z1 obtained in step b) is equal or less than 120 sec, preferably in the range of 50 to 120 sec, more preferably in the range of 60 to 100 sec (determined according to DIN 53211, at 20 °C and using 6 mm flow cup). Typically the weight averaged molecular weight M_{w} of the polymer obtained in the first polymerization stage (step a) and/or of the polymer contained in the prepolymer composition Z1 is equal to or less than 500.000 g/mol, preferably in the range of 150.000 to 300.000 g/mol.

Generally, the reaction mixture obtained in the first polymerisation stage (step a) as well as the prepolymer composition Z1 obtained in step b) remain in a liquid state, preferably highly viscous liquid state, and are often referred to as polymer syrup.

### First reaction mixture M1

Preferably, the first reaction mixture comprises as monomers i) at least 50 wt.-%, preferably at least 60 wt.-%, particularly preferably at least 80 wt.-%, and even more preferably at least 90 wt.-%, based on the weight of all monomers in the first reaction mixture, of alkyl (meth)acrylates, preferably C₁-C₁₂ alkyl (meth)acrylates. Most preferably the first reaction mixture comprises as monomers i) at least 60 wt.-%, particularly preferably at least 80 wt.-%, and even more preferably at least 90 wt.-%, based on the weight of all monomers in the first reaction mixture, methyl methacrylate (MMA). The reaction mixture may preferably comprise at least one alkyl (meth)acrylate, preferably C₁-C₁₂ alkyl (meth)acrylate, more preferably C₁-C₆ alkyl (meth)acrylate, different from MMA which can be copolymerized with MMA. These alkyl (meth)acrylate different from MMA may be selected from (meth)acrylates derived from saturated alcohols, e.g. methyl acrylate, ethyl (meth)acrylate, propyl (meth)acrylate, n-butyl (meth)acrylate, tert-butyl (meth)acrylate, isobutyl (meth)acrylate, pentyl (meth)acrylate and 2-ethylhexyl (meth)acrylate; (meth)acrylates derived from unsaturated alcohols, e.g. oleyl (meth)acrylate, 2-propynyl (meth)acrylate, allyl (meth)acrylate, vinyl (meth)acrylate; cycloalkyl (meth)acrylates, such as 3-vinylcyclohexyl (meth)acrylate, bornyl (meth)acrylate; hydroxyalkyl (meth)acrylates, such as 3-hydroxypropyl (meth)acrylate, 3,4-dihydroxybutyl (meth)acrylate, 2 hydroxyethyl (meth)acrylate, 2-hydroxypropyl (meth)acrylate
Preferably at least one C1-C12 alkyl (meth)acrylate different from MMA is selected from methyl acrylate, ethyl (meth)acrylate, propyl (meth)acrylate, n-butyl (meth)acrylate, tert-butyl (meth)acrylate, isobutyl (meth)acrylate, pentyl (meth)acrylate and 2 ethylhexyl (meth)acrylate.

Preferably, the amount of methyl methacrylate in the first reaction mixture M1 is in the range from 50.0 wt.-% to 100.0 wt.-%, preferably from 80.0 wt.-% to 99.9 wt.-% and particularly preferably from 90.0 wt.-% to 99.0 wt.-%, based on the total weight of all monomers in M1. Preferably, the amount of C1-C6 alkyl (meth)acrylate different from MMA in the first reaction mixture M1 is in the range from 0 wt.-% to 50.0 wt.-%, preferably from 0.1 wt.-% to 20.0 wt.-% and particularly preferably from 1.0 wt.-% to 10.0 wt.-%, based on the total weight of all monomers in M1.

Furthermore, the first reaction mixture M1 may comprise at least one additional monomer (co-polymerizable monomer), which is co-polymerizable with the at least one alkyl (meth)acrylate, preferably with MMA. This at least one co-polymerizable monomer may be selected from unsaturated carboxylic acids, preferably (meth)acrylic acid; aryl (meth)acrylates, such as benzyl (meth)acrylate or phenyl (meth)acrylate; glycol di(meth)acrylates, such as 1 ,4-butanediol (meth)acrylate, (meth)acrylates of ether alcohols, e.g. tetrahydrofurfuryl (meth)acrylate, vinyloxyethoxyethyl (meth)acrylate; amides and nitriles of (meth)acrylic acid, e.g. N-(3-dimethylaminopropyl)(meth)acrylamide, N-(diethylphosphono)-(meth)acrylamide, 1-methacryloylamido-2-methyl-2-propanol; sulphur-containing methacrylates, such as ethylsulphinylethyl (meth)acrylate, 4-thiocyanatobutyl (meth)acrylate, ethylsulphonylethyl (meth)acrylate, thiocyanatomethyl (meth)acrylate, methyl-sulphinylmethyl (meth)acrylate, bis((meth)acryloyloxyethyl) sulphide; polyfunctional (meth)¬acrylates, such as trimethyloylpropane tri(meth)acrylate; 1-alkenes, such as 1-hexene, 1-heptene; branched alkenes, such as vinylcyclohexane, 3,3-dimethyl-1-propene, 3 methyl-1-diisobutylene, 4-methyl-1-pentene; acrylonitrile; vinyl esters, such as vinyl acetate; vinyl aromatic monomers, such as styrene, substituted styrene having an alkyl substituent in the side chain (e.g. alphamethylstyrene and alpha-ethylstyrene), substituted styrene having an alkyl substituent on the ring (e.g. vinyltoluene and p methylstyrene), halogenated styrene (e.g. monochlorostyrenes, dichlorostyrenes, tribromostyrenes and tetrabromostyrenes); heterocyclic vinyl compounds, such as 2 vinyl¬pyridine, 3-vinylpyridine, 2-methyl-5-vinylpyridine, 3-ethyl-4-vinylpyridine, 2,3-dimethyl-5-vinylpyridine, vinylpyrimidine, vinylpiperidine, 9 vinylcarbazole, 3-vinylcarbazole, 4-vinylcarbazole, 1-vinylimidazole, 2-methyl-1-vinylimidazole, N-vinylpyrrolidone, 2-vinylpyrrolidone, N-vinylpyrrolidine, 3 vinylpyrrolidine, N-vinylcaprolactam, N-vinylbutyrolactam, vinyloxolane, vinylfuran, vinylthiophene, vinylthiolane, vinylthiazoles and hydrogenated vinylthiazoles, vinyloxazoles and hydrogenated vinyloxazoles; vinyl ethers and isoprenyl ethers; maleic acid derivatives, such as maleic anhydride, methylmaleic anhydride, maleimide, methylmaleimide; and dienes, such as divinylbenzene.

The amount of these co-polymerizable monomers may typically be from 0.0 wt.-% to 10.0 wt.-%, preferably from 0.0 wt.-% to 5.0 wt.-% and particularly preferably from 0.0 wt.-% to 2.0 wt.-%, based on the weight of monomers in M1.

In a preferred embodiment, the first reaction mixture M1 comprise 0 wt.-% to 10 wt.-%, preferably 0 wt.-% to 5 wt.-%, more preferably 0 wt.-% to 3 wt.-% unsaturated carboxylic acids, preferably methacrylic acid and/or acrylic acid, based on the weight of monomers in M1.

Preferably, the first reaction mixture M1 comprises as monomers i), each based on the total weight of monomers i) in M1:
(I) from 50.0 wt.-% to 100.0 wt.-%, preferably 80.0 wt.-% to 100.0 wt.-%, also preferably 80.0 wt.-% to 99.9 wt.-%, of methyl methacrylate,
(II) from 0.0 wt.-% to 50.0 wt.-% preferably 0.0 wt.-% to 20 wt.-%, also preferably 0.1 wt.-% to 20.0 wt.-%, of monomers co-polymerizable with the methyl methacrylate, for example as described above, preferably selected from C₁-C₁₂ alkyl (meth)acrylate different from methyl methacrylate, unsaturated carboxylic acids, and vinyl aromatic monomers; more preferably selected from unsaturated carboxylic acids.

The first reaction mixture M1 may also comprise cross-linking monomers described as crosslinking agents under additional additives.

Preferably, the first reaction mixture M1 comprises (each based on the total weight of first reaction mixture M1):
i. 69.9999 to 99.998 wt.-%, preferably 79.9999 to 99.9899 wt.-%, more preferably 89.9999 to 99.8999 wt.% of at least one alkyl (meth)acrylate, preferably selected from C1-C6 alkyl (meth)acrylate, more preferably methyl (meth)acrylate; optionally 0.0 to 20.0 wt.-%, preferably 0.0 to 10.0 wt.-%, of at least one co-polymerizable monomer, for example selected from (meth)acrylic acid;
ii. 0.0001 to 29.0 wt.-%, preferably 0.01 to 20.0 wt.-%, more preferably 0.1 to 10.0 wt.-% of at least one particulate additive, preferably selected from IR absorbers, scattering particles, and pigments, wherein the particulate additive is dispersed in the first reaction mixture M1, and
iii. 0.0001 to 0.1 wt.-% (1 to 1,000 ppm) of at least one radical initiator; and
iv. 0 to 25 wt.%, preferably 0 to 10 wt.-%, of optional additional additives.

If one or more of optional components are present, the amount of the at least one alkyl (meth)acrylate monomer may be adapted accordingly.

According to a preferred embodiment of the invention, the first reaction mixture M1 comprises (each based on the total weight of first reaction mixture M1):
i. 89.999 to 99.998 wt.-%, preferably 94.9999 to 99.9899 wt.-%, more preferably 95.9999 to 99.8999 wt.% of at least one alkyl (meth)acrylate, preferably selected from C1-C6 alkyl (meth)acrylate, more preferably methyl(meth)acrylate; optionally 0.0 to 9.0 wt.-%, preferably 0.0 to 5.0 wt.-%, of at least one co-polymerizable monomer, for example selected from (meth)acrylic acid;
ii. 0.0001 to 10.0 wt.-%, preferably 0.01 to 5.0 wt.-%, more preferably 0.1 to 4.0 wt.-%, of at least one particulate additive, preferably selected from IR absorbers, wherein the particulate additive is dispersed in the first reaction mixture M1, and
iii. 0.0001 to 0.1 wt.-% (1 to 1,000 ppm) of at least one radical initiator; and
iv. 0 to 10 wt.-%, preferably 0 to 5.0 wt.-% of optional additional additives.

According to a another preferred embodiment of the invention (masterbatch procedure), the first reaction mixture M1 comprises (each based on the total weight of first reaction mixture M1):
i. 49.999 to 99.9899 wt.-%, preferably 59.9999 to 99.8999 wt.-%, more preferably 69.9999 to 98.9999 wt.% of at least one alkyl (meth)acrylate, preferably selected from C1-C6 alkyl (meth)acrylate, more preferably methyl(meth)acrylate; and optionally 0.0 to 9.0 wt.-%, preferably 0.0 to 5.0 wt.-%, of at least one co-polymerizable monomer, for example selected from (meth)acrylic acid;
ii. 0.01 to 50.0 wt.-%, preferably 0.1 to 40.0 wt.-%, more preferably 1.0 to 30.0 wt.-%, of at least one particulate additive, preferably selected from IR absorbers, wherein the particulate additive is dispersed in the first reaction mixture M1, and
iii. 0.0001 to 0.1 wt.-% of at least one radical initiator; and
iv. 0 to 10 wt.-%, preferably 0 to 5.0 wt.-% of optional additional additives.
and preferably at least one additional monomer component is added to the second reaction mixture M2, wherein the additional monomer component is selected from alkyl (meth)acrylate, preferably including methyl methacrylate, and optionally co-polymerizable monomers, as described above; and/or at least one additional prepolymer composition Z2, which is obtained by polymerisation of at least one alkyl (meth)acrylate, preferably including methyl methacrylate, and optionally at least one co-polymerizable monomer. Preferably, the additional monomer component added in this masterbatch procedure does not contain any particulate additive, in particular does not contain particulate IR absorber.

Typically, according to the inventive masterbatch procedure, the first reaction mixture M1 is in a liquid state, typically in a highly viscous liquid state, at ambient temperature.

### Initiator

The polymerization reaction in first polymerization stage and/or second polymerization stage is generally initiated by known free-radical initiators (referred to as initiator in the following).

Among the preferred initiators are inter alia the azo initiators well known to persons skilled in the art, e.g. 2,2'-azobis isobutyronitrile (AIBN) and 1,1 azobiscyclohexanecarbonitrile, as well as peroxy compounds, such as methyl ethyl ketone peroxide, acetylacetone peroxide, dilauryl peroxide, tert-butyl 2-ethylperhexanoate, ketone peroxide, methyl isobutyl ketone peroxide, cyclohexanone peroxide, dibenzoyl peroxide, tert-butyl peroxybenzoate, tert-butylperoxy isopropyl carbonate, 2,5-bis(2-ethylhexanoylperoxy)-2,5-dimethylhexane, tert-butyl 2-ethylperoxyhexanoate, tert-butyl 3,5,5-trimethylperoxyhexanoate, dicumyl peroxide, 1,1-bis(tert-butylperoxy)cyclohexane, 1,1 bis(tert-butylperoxy)-3,3,5-trimethylcyclohexane, cumyl hydroperoxide, tert-butyl hydroperoxide, bis(4 tert-butylcyclohexyl) peroxydicarbonate. Further mixtures of two or more of the abovementioned compounds may be used.

Typically, the initiator is added in an amount in the range of 1 to 10.000 ppm, preferably 1 to 5.000 ppm, based on the total amount of monomers.

### Particulate Additives

According to the present invention, the first reaction mixture M1, polymerized in the first polymerization stage, comprises at least one particulate additive, wherein the particulate additive is dispersed in the first reaction mixture M1. In terms of the present invention the term "particulate additive" refers to additives, selected from inorganic or organic additives, which are practically insoluble in the first reaction mixture M1 and dispersed in form of solid particles, preferably finely dispersed solid particles, in the first reaction mixture. Typically, the "particulate additives" are practically insoluble and dispersed in form of solid particles in the mixtures of the subsequent process stages, i.e. prepolymer composition Z1, second reaction mixture M2, and the polymer matrix of the semi-finished product.

Preferably, the at least one particulate additive is selected from IR absorbers, scattering particles, and pigments. According to a particular preferred embodiment, the at least one particulate additive comprises at least one IR absorber, more preferably at least on inorganic IR absorber, most preferably at least one IR absorber selected from tungstates. For example, the IR absorber may be the sole particular additive used in the inventive process or the IR absorber may be used in combination with one or more other particulate additive as described below in the inventive process.

Preferably, the whole amount of all particulate additives in the first reaction mixture M1 and/or in the second reaction mixture M2 is in the range of 0.001 to 30.0 wt.-%, preferably 0.01 to 20.0 wt.-%, more preferably 0.1 to 10.0 wt.-%, based on the first reaction mixture M1 and/or in the second reaction mixture M2.

Typically, the whole amount of particulate additives, preferably the whole amount of IR absorbers, is added during the first polymerization stage, meaning that no particulate additive, preferably no IR absorber, is added after the stage where the prepolymer composition Z1 is obtained (step b).

According to a preferred embodiment, the inventive process may be carried out via masterbatch procedure, wherein the at least one particulate additive, preferably the whole amount of IR absorber used as particulate additive, is added to the first reaction mixture M1 in an amount which is 2- to 60-fold, preferably the 4- to 40-fold, of the amount desired in the semi-finished product. In case of said masterbatch procedure, typically at least one additional monomer component, selected from at least one additional monomer and at least one additional prepolymer compositions Z2 is added in second polymerization stage (step c). Preferably, in case of said masterbatch procedure at least one, preferably exactly one, additional prepolymer composition Z2 is added in second polymerization stage, wherein said additional prepolymer composition Z2 does not contain any particulate additive, preferably does not contain particulate additive selected from IR absorbers, scattering particles, and pigments; more preferably does not contain any IR absorber as particulate additive.

### IR Absorbers

In a preferred embodiment of the invention, the first reaction mixture M1 comprises as particulate additive at least one IR absorber, typically selected from inorganic particulate IR absorbers as described below. Preferably, the at least one IR absorber is used as sole particulate additive in the inventive process. Furthermore, it is preferred that the at least one IR absorber is used in combination with one or more other particulate additive as described below, such as scattering particles and/or pigments.

Generally IR-absorbing additives based on inorganic materials are commonly known in the state of the art and are often more stable compared with organic IR absorbers. Typically, IR absorbers can be used in the inventive process, which exhibit a wide range of absorption spectrum in the infrared spectral range, in particular in the near infrared spectrum from 750 nm to 2500 nm, with simultaneously low absorption in the visible spectral range and low natural colour. A variety of IR absorbers based on organic or inorganic materials and their use in transparent thermoplastic material described in the state of the art, e.g. WO 2011/141365 A1, US 2009/0093578 A1, US 7,759,414 B, DE 101 17 785 A1).

Preferably, the at least one particulate additive is selected from inorganic particulate IR absorbers, typically in the form of nanoparticles.

For example, the at least one IR absorber may be selected from commonly known inorganic boride-based IR absorbers. Typically, said boride-based IR absorbers are based on hexaboride nanoparticles having a particle size of equal or less than 200 nm, preferably equal or less than 100 nm. Typically, such hexaborides based on compounds of formula MB₆ with M is at least one metal selected from La, Ce, Pr, Nd, Tb, Dy, Ho, Y, Sm, Eu, Er, Tm, Yb, Lu, Sr, Ti, Zr, Hf, V, Ta, Cr, Mo, Wand Ca. One particular suitable IR absorber based on hexaborides is lanthanum hexaboride (LaB₆). Said hexaboride nanoparticles may also comprise additional particles, for example SiO2, TiO2, ZrO2, Al2O3, or MgO. These hexaboride based IR absorbers are for example described in US 2004/131845 A1 and are commercially available, e.g. from Sumitomo Metal Mining, Japan.

Preferably, the at least one IR absorber is selected from the commonly known IR absorbers based on metal oxides, for example tungsten oxides; tungsten bronzes (also referred to as tungstates), in particular caesium tungstates and zinc-doped caesium tungstates, tin oxides, in particular indium tin oxide (ITO), and tin-doped antimony oxide (ATO). Said IR absorbers based on metal oxide compounds are for example described in EP 1 676 890 A1, and WO 2009/059901 A2.

Preferably, the particulate additive comprises at least one IR absorber selected from tungsten bronzes (also referred to as tungstates) represented by the general formula MₓWO₃, with M is a metal selected from alkali metals, alkaline earth metals or rare earth metals, preferably caesium (Cs); and x is any real number from 0 to 1, preferably from 0.001 to 1.0000, more preferably from 0.01 to 0.5, also preferably from 0.2 to 0.4, most preferably from 0.2 to 0.35. According to a particular preferred embodiment, the at least one IR absorber comprises (or is) a caesium tungsten bronze represented by the formula Cs_{0.33}WO₃. Such IR absorbers based on caesium tungsten bronze are commercially available, e.g. CWO^{™} from Sumitomo Metal Mining, Japan (acrylate dispersion) or products available from Everlight Chemical.

Typically, the at least one caesium tungsten bronze CsₓWO₃ with x is from 0.001 to 1.000 used in the inventive process as particulate additive is prepared by reaction of tungsten oxide in a caesium iodide melt at about 700 °C. The caesium tungsten bronze CsₓWO₃ is typically obtained in form of a black powdery solid, preferably in form of solid nanoparticles, exhibiting hexagonal-prismatic crystals and a density of about 7.34 g/cm³.

Furthermore, zinc doped tungsten bronzes represented by the general formula Zn_{y}MₓWO₃, with M is a metal selected from alkali metals, alkaline earth metals or rare earth metals, preferably caesium (Cs); y is from 0.001 to 0.015, and x is an from 0 to 1, preferably from 0.001 to 1.000, most preferably 0.25 to 0.35, may be used as IR absorber in the inventive process. Particularly preferred is a zinc doped tungsten bronze represented by the formula Zn_{y}Cs_{0.33}WO₃ with y is from 0.001 to 0.01.

According to a preferred embodiment the tungsten bronze as described above, preferably the caesium tungsten bronze represented by the general formula MₓWO₃ as defined above is the only IR absorber used as particulate additive in the inventive process. More preferably, a caesium tungsten bronzes represented by the general formula MₓWO₃ as defined above with M = Cs, is the only particulate additive used in the inventive process.

The surface of the particles of the IR absorber may be surface-modified, e.g. treated with a silane compound or provided with layer based on titanium or zirconium. Typically, this type of coating may increase the long-term stability with regard to IR absorption and is described e.g. in US 2005/0161642.

Typically, the IR absorber, preferably the at least one caesium tungsten bronze CsₓWO₃ with x is from 0.001 to 1.000 is used in form of a dispersion in a liquid, e.g. Tripropylenglycoldiacrylat (TPGDA), or as a masterbatch embedded in a liquid polymer matrix, e.g. low molecular weight PMMA.

According to a preferred embodiment (direct procedure without addition of one additional monomer component in step c), the first reaction mixture M1 comprises 0.001 wt.-% to 2.0 wt.-%, preferably 0.01 wt.-% to 2.0 wt.-%, more preferably 0.01 wt.-% to 0.5 wt.-%, based on the total weight of first reaction mixture M1, of at least one IR absorber as particular additive, preferably selected from caesium tungsten bronzes CsₓWO₃ with x is from 0.001 to 1.000, calculated as solid content of the IR absorber (e.g. calculated as solid content of caesium tungsten bronze). Also preferably, the first reaction mixture M1 may comprise 0.01 wt.-% to 0.4 wt.-%, preferably 0.05 wt.-% to 0.2 wt.-%, based on the total weight of first reaction mixture M1, of at least one IR absorber as particular additive.

According to a another preferred embodiment (masterbatch procedure with addition of one additional monomer component in step c), the first reaction mixture M1 comprises 0.01 wt.-% to 20.0 wt.-%, preferably 0.02 wt.-% to 10.0 wt.-%, more preferably 0.1 wt.-% to 8.0 wt.-%, based on the total weight of first reaction mixture M1, of at least one IR absorber as particular additive, preferably selected from caesium tungsten bronzes CsₓWO₃ with x is from 0.001 to 1.000, calculated as solid content of the IR absorber (e.g. calculated as solid content of caesium tungsten bronze); and at least one additional monomer component is added to the second reaction mixture M2, wherein the additional monomer component is selected from alkyl (meth)acrylate, preferably including methyl methacrylate, and optionally co-polymerizable monomers, as described above; and/or at least one additional prepolymer composition Z2, which is obtained by polymerisation of at least one alkyl (meth)acrylate, preferably including methyl methacrylate, and optionally at least one co-polymerizable monomer.

0.0005 wt.-% to 4.0 wt.-%, preferably 0.005 wt.-% to 3.2 wt.-%, more preferably 0.05 wt.-% to 1.2 wt.-%,

Furthermore, the at least one IR absorber may comprise a compound selected from indium oxide doped with 2 to 30 atom% tin (ITO) or doped with 10 to 70 atom% fluorine; tin oxide doped with 2 to 60 atom% antimony (ATO) or doped with 10 to 70 atom% fluorine; and zinc oxide doped with 1 to 30 atom% aluminium, indium or gallium.

For example, organic IR absorbers, such as phthalocyanines, naphthalocyanines, metal complexes, azo dyes, anthraquinones, perylenes, and quaterylenes, may be used in the inventive process.

Furthermore, it is preferred to use mixtures of caesium tungsten bronzes CsxWO3 with x is from 0.001 to 1.000 with one or more other IR absorbers as described above as particulate additive.

### Scattering particles

For example, the first reaction mixture M1 may comprise at least one scattering particle, typically selected from organic and/or inorganic scattering particles, as particulate additive. According to preferred embodiments, the at least one scattering particle is used as sole particulate additive in the inventive process or the at least one scattering particle is used in combination with one or more other particulate additive, e.g. selected from IR absorbers and pigments, in the inventive process.

Although the choice of the scattering particles is not particularly limited, they are typically selected in such way that the refractive index of the scattering particles differs from that of the polymer matrix, which is mainly formed by the polyalkyl(meth)acrylate, by at least 0.01. The refractive index can be measured at the Na D-line at 589 nm at 23 °C as specified in the standard ISO 489 (1999). Typically, scattering particles may be present in an amount of 0.1 to 25 wt.-%, based on the total weight of the first reaction mixture M1 or based on the second reaction mixture M2 (in case of master-batch procedure).

Typically, the scattering particles have a weight average particle diameter of from 0.01 µm to 100.0 µm and refractive index of the scattering particles differs from that of the polymer matrix by at least 0.01.

Inorganic scattering particles may include traditional inorganic opacifiers, e.g. barium sulphate, calcium carbonate, titanium dioxide or zinc oxide.

Organic scattering particles are typically spherical scattering beads consisting of a cross-linked polymeric material such as polyalkyl(meth)acrylates, silicones, polystyrenes etc. Preferred scattering beads composed of crosslinked polystyrenes are commercially available from Sekisui Plastics Co., Ltd. with the trademarks Techpolymer^{®} SBX-4, Techpolymer^{®} SBX-6, Techpolymer^{®} SBX-8 and Techpolymer^{®} SBX-12. Other particularly preferred spherical plastics particles which are used as scattering agents comprise cross-linked silicones. Silicone scattering agents particularly preferably used in the present invention are obtainable from Momentive Performance Materials Inc. as TOSPEARL^{®} 120 and TOSPEARL^{®} 3120.

### Pigments

For example, the first reaction mixture M1 may comprise at least one pigment, typically selected from organic and/or inorganic pigments, as particulate additive. According to preferred embodiments, the at least one pigment is used as sole particulate additive in the inventive process or the at least one pigment is used in combination with one or more other particulate additive, e.g. selected from IR absorbers and scattering particles, in the inventive process.

Typically, the term "pigment" refers to inorganic or organic colorants which are practically insoluble in the polymer matrix, which is mainly formed by the polyalkyl(meth)acrylate, in amounts in which it is used for colouring the polymer matrix of semi-finished product. Typically, the term "pigment" encompasses coloured, white and black colorants. Typically, the term "pigment" refers to inorganic or organic colorants which are dispersed in form of solid particles, particularly finely dispersed solid particles, in the polymer matrix.

Preferably, the at least one organic and/or inorganic pigment is present in an amount of 0.00001 to 5.0 wt.-% preferably from 0.0001 to 4.0 wt.-%, more preferably from 0.001 to 3.0 wt.-%, also preferably from 0.01 to 2.0 wt.-%, based on the total weight of the first reaction mixture M1 or based on the second reaction mixture M2 (in case of master-batch procedure).

Examples of suitable pigments used as particulate additive include commonly known pigments for use in plastics, such as barium sulphate, zinc oxide, iron oxides (e.g. pigments of type Bayferrox^{®} from Lanxess), magnesium titanate, calcium sulphate, calcium carbonate, magnesium carbonate, titanium dioxide, carbon black, ultramarine blue, and also the entire class of organic pigments. Typically, suitable organic pigments may be selected from phthalocyanines (e.g. Cu phthalocyanines), benzimidazolone pigments, e.g. Pigment Yellow 151; isoindoline derivatives, e.g. Pigment Yellow 139; diazo pigments, e.g. Pigment Red 242; and anthraquinone pigments, e.g. Pigment Yellow 147 (1-({4-[(9,10-dioxo-9,10-dihydroanthracen-1-yl)amino]-6-phenyl-1,3,5-triazin-2-yl}amino)-9,10-dihydroanthracene-9,10-dione). Phthalocyanines may be selected from metal-free phthalocyanines, cobalt phthalocyanines, copper phthalocyanines, nickel phthalocyanines, iron phthalocyanines, manganese phthalocyanines and zinc phthalocyanines, more preferably from copper phthalocyanines. In particular, suitable copper phthalocyanine pigments may be selected from Pigment Blue 1, 2, 15, 15:1, 15:2, 15:3, 15:4, 15:6, 16, 17:1, 56, 60, and 63 as well as Pigment Green 7 and 36.

### UV Absorber

For example, the first reaction mixture M1 may comprise at least one particulate UV absorber, typically selected from commonly known organic and inorganic UV absorbers, as particulate additive. According to preferred embodiments, the at least one UV absorber is used as sole particulate additive in the inventive process or in combination with one or more other particulate additives.

Examples of compounds, which may be used as organic UV absorber are benzotriazoles, triazines, compounds of the group of the sterically hindered amines (hindered amine light stabilizer, HALS) or sterically hindered phenols. Typically, the organic or inorganic UV absorber used as particulate additive is not soluble in the polymer matrix based of polyalkyl(meth)acrylate and is present in form of particles finely dispersed in the polymer matrix based of polyalkyl(meth)acrylate.

Examples of UV absorbers of benzotriazole type are 2-(2-hydroxy-5-methylphenyl)benzotriazole, 2-[2-hydroxy-3,5-di(α,α-dimethylbenzyl)phenyl]benzotriazole, 2-(2-hydroxy-3,5-di-tert-butylphenyl)benzotriazole, 2-(2-hydroxy-3,5-butyl-5-methylphenyl)-5-chlorobenzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-butylphenyl)benzotriazole, 2-(2-hydroxy-3-sec-butyl-5-tert-butylphenyl)benzotriazole and 2-(2-hydroxy-5-tert-octylphenyl)benzotriazole, phenol, 2,2'-methylenebis[6-(2H-benzotriazol-2-yl)-4-(1,1,3,3-tetramethylbutyl)].

Example of triazine type UV absorbers is 2-(4,6-diphenyl-1 ,3,5-triazin-2-yl)-5-hexyloxyphenol.

Examples of HALS compounds are: bis(2,2,6,6-tetramethyl-4-piperidyl) sebacate, 8-acetyl-3-dodecyl-7,7,9,9-tetramethyl-1,3,8-triazaspiro(4,5)-decane-2,5-dione, bis(2,2,6,6-tetramethyl-4-piperidyl) succinate, poly(N-β-hydroxyethyl-2,2,6,6-tetramethyl-4-hydroxypiperidine succinate) or bis(N-methyl-2,2,6,6-tetramethyl-4-piperidyl) sebacate.

Further, the UV absorber may be an inorganic particulate material, such as selected from zinc oxide, titanium dioxide, cerium dioxide, tin dioxide, iron oxides, silica or glass which may be in form of glass beads or glass powder. Examples of suitable inorganic particulate materials are for instance Solasorb^{™} UV100 (titanium dioxide dispersion, contains 45 wt.-% of an inorganic and organic coated titanium dioxide, average particle size 40 nm), Solasorb^{™} UV200 (zinc oxide dispersion, contains 60 wt.-% zinc oxide, average particle size 60 nm) available from Croda International Plc (Snaith, United Kingdom).

### Optional additional additives

The first reaction mixture M1 and/or the second reaction mixture M2 may comprise one or more additional additives selected from conventional additives, for example selected from crosslinking agents, stabilizers, chain transfer agents, regulators, release agents, organic dyes, and impact modifiers. Typically, said additional additives may be present in an amount of 0.001 to 40 wt.-%, based on the total weight of the first reaction mixture M1 or based on the second reaction mixture M2.

Typically, at least one chain transfer agents may be added to the first reaction mixture M1 and/or the second reaction mixture M2, preferably in an amount of from 1 to 10.000 ppm, preferably 1 to 5.000 ppm, based on the total amount of monomers used in the first or second polymerisation stage. Suitable chain transfer agents may be selected from mercapto compounds (thiols), such as 1-dodecylmercaptane, or halocarbon compounds, such as tetrachloromethane.

It may further be beneficial to improve the mechanical and optical properties of the semi-finished products by addition of at least one crosslinking agent to the first reaction mixture M1. Preferably, the first reaction mixture M1 may comprise 0.0001 to 2 wt.-%, preferably 0.0001 to 1.5 wt.-%, more preferably 0.0001 to 1 wt.-%, based on the weight of the first reaction mixture M1, of one or more cross-linking agents. Furthermore, it is possible to add at least one crosslinking agent as additional additives during the second polymerization stage, wherein the second reaction mixture M2 may comprise 0.0001 to 2 wt.-%, preferably 0.0001 to 1.5 wt.-%, more preferably 0.0001 to 1 wt.-%, based on the weight of the second reaction mixture M1, of one or more cross-linking agents. Preferred examples of compounds which may be used as crosslinking agents are diacrylate compounds (such as diacrylate, dimethacrylate, glycol dimethacrylate, allylmethacrylate, pentaerythrittetramethacrylat) and triazine derivatives (such as triallyl cyan urate).

The first reaction mixture M1 and/or the second reaction mixture M2 may further comprise stabilizers and other conventional additives like for example organic dyes, release agents and/or regulators. Typically, said additional additives, selected from stabilizers, organic dyes, release agents and/or regulators, may be present in an amount of 0.001 to 20 wt.-%, preferably 0.001 to 10 wt.-%, more preferably 0.001 to 5.0 wt.-%, based on the first reaction mixture M1 or based on the second reaction mixture M2. For example, suitable stabilizers may be selected from benzotriazoles, HALS compounds, sterically hindered phenols, and mixtures thereof. HALS compounds are sterically hindered amines, as described by way of example in JP3047856A. For example, suitable regulators may be selected from carbocyclic regulators, sulphur-containing regulators, terpines and terpinols.

In some embodiments, the first reaction mixture M1 and/or the second reaction mixture M2 may further comprise suitable impact modifiers. Core/shell as well as core/shell/shell impact modifiers, as known in the art and commercially available, or mixtures of both can be used. Suitable impact modifiers are for example described in WO 2012/130595 A1. Typically, impact modifiers may be present in an amount of 0.5 to 35.0 wt.-%, preferably 1 to 30 wt.-%, more preferably 5.0 to 25.0 wt.-%, based on the total weight of the first reaction mixture M1 or based on the second reaction mixture M2.

Further, the first reaction mixture M1 and/or the second reaction mixture M2 can further comprise at least organic dye, in particular an soluble organic dye. In terms of the present invention "organic dye" or "soluble organic dye" refers to organic colorants, which are soluble in the polymer matrix, which is mainly formed by the polyalkyl(meth)acrylate, in amounts in which it is used for colouring the polymer matrix of semi-finished product. Typically, the term "organic dye" or "soluble organic dye" refers to organic dyes which are dispersed monomolecular in the polymer matrix and the polymer matrix solely comprising the soluble organic dye show a very low haze. Preferably, the at least organic dye C is present in an amount of 0.00001 to 5.0 wt.-% preferably from 0.0001 to 4.0 wt.-%, more preferably from 0.001 to 3.0 wt.-%, also preferably from 0.01 to 2.0 wt.-%, based on the total weight of the first reaction mixture M1 or based on the second reaction mixture M2. For example, the at least one organic dye C is selected from monoazo dyes, perinone dyes, quinophthalone dyes, anthraquinone dyes and pyrazolone dyes.

The first reaction mixture M1 and/or the second reaction mixture M2 may comprise one or more additional additives selected from light stabilizers which are understood to include UV absorbers, UV stabilizers and free-radical scavengers. UV absorbers and UV stabilizers are well known and are described in detail by way of example in Hans Zweifel, Plastics Additives Handbook, Hanser Verlag, 5th Edition , 2001, p. 141 ff.

UV absorbers can by way of example selected from substituted benzophenones, salicylic esters, cinnamic esters, oxanilides, benzoxazinones, hydroxyphenylbenzotriazoles, benzotriazole, triazines or benzylidenemalonate. Commonly known UV stabilizers/free-radical scavengers are provided by the group of the sterically hindered amines (hindered amine light stabilizer, HALS). Typically, light stabilizes are used in an amount from 0.1 wt.-% to 5.0 wt.-%, preferably from 0.2 wt.-% to 3.0 wt.-%, based on the total weight of the first reaction mixture M1 or based on the second reaction mixture M2. It is also possible to use combinations of different light stabilizes.

### Obtaining prepolymer composition Z1 (step b)

In step b of the inventive process the polymerisation reaction of first polymerization stage is stopped, preferably by cooling the reaction mixture and/or by adding at least one polymerisation inhibitor to the reaction mixture, wherein a prepolymer composition Z1 (partially polymerized polymer syrup Z1) is obtained.

Typically, the polymerisation reaction of first polymerization stage is stopped when the first reaction mixture has a viscosity equal or less than 120 sec, preferably in the range of 50 to 120 sec, more preferably in the range of 60 to 100 sec (determined according to DIN 53211, at 20 °C and using 6 mm flow cup). Typically, the polymerisation reaction of first polymerization stage is stopped when at least 20 wt.-%, preferably 20 wt.-% to 30 wt.%, of the monomers used in the first polymerization stage are converted.

For example, the polymerisation reaction of first polymerization stage is stopped by cooling the reaction mixture down to a temperature of 15 °C to 50 °C, preferably 20 °C to 30 °C, more preferably down to ambient temperature. Typically, cooling down in step b) starts from a temperature in the range of 70 °C to 100 °C, preferably 75 °C to 90 °C, which is the temperature of the reaction mixture after end of first polymerisation stage. Cooling of the reaction mixture can be carried out via commonly known methods, for example via commonly heat transfer apparatus, e.g. via tubular heat exchangers or plate heat exchangers using any suitable and commonly known heat transfer medium.

For example, the polymerisation reaction of first polymerization stage is stopped by adding one polymerisation inhibitor to the reaction mixture of the first polymerisation stage. Typically, suitable polymerisation inhibitor are known by a skilled person, typically such polymerisation inhibitors are free radical scavenger, such as thioether compounds, organic disulfide compounds, mercapto compounds, phenolic compounds, or hydroquinone.

The reaction mixture after stopping the first polymerisation stage is used as prepolymer composition Z1 in the second polymerisation stage. Generally, the prepolymer composition Z1 (also referred to as polymer syrup) is in a liquid state, preferably a highly viscous liquid state, at ambient temperature, so that the prepolymer composition Z1 can easily be transferred in the predefined form, e.g. a polymerisation chamber build up by two glass plates, which are separated by a sealing tape defining the thickness of the sheet.

### Second polymerization stage (step c)

The second polymerization stage (step c) of the inventive process encompasses the polymerization of the second reaction mixture M2 in a predefined form (curing of the second reaction mixture comprising the prepolymer composition Z1), wherein the semi-finished product based on polyalkyl(meth)acrylate is obtained, and wherein the second reaction mixture M2 comprises:
i. the prepolymer composition Z1 obtained in step b;
ii. at least one initiator;
iii. optionally at least one additional monomer component selected from additional monomers and/or one or more prepolymer compositions Z2, and
iv. optional additional additives.

Typically, the second reaction mixture is prepared by mixing the prepolymer composition Z1, the at least one initiator, and optionally additional monomer components and/or additional additives, for example in a stirred tank reactor. Afterwards, the second reaction mixture M2 is filled into the predefined form.

According to a preferred embodiment, the polymerisation is carried out via a commonly known casting process (e.g. described in the DE 29 41 959 A1, DE 632 951, DE 19 832 018.3 and WO 2005/049666). Preferably, the second reaction mixture M2 is filed into a predefined form (polymerisation chamber), which is build up by at least two glass plates, which are separated by a sealing tape defining the thickness of the sheet obtained as semi-finished products. Typically, the two plates separated by the sealing are hold together with clamps.

According to a preferred embodiment, at least one additional monomer component may be added to the second reaction mixture M2. For example, the additional monomer component can be selected from alkyl (meth)acrylate, preferably including methyl methacrylate, and optionally co-polymerizable monomers, as described above; and/or at least one additional prepolymer composition Z2, which is typically obtained by polymerisation of at least one alkyl (meth)acrylate, preferably including methyl methacrylate, and optionally at least one co-polymerizable monomer. Generally, the additional prepolymer composition Z2 may be prepared similar to the prepolymer composition Z1 as described above, preferably the additional prepolymer composition Z2 does not include any particulate additive and is prepared without the addition of an particulate additive to the first reaction mixture.

Preferably, the inventive process (masterbatch procedure) includes in the second polymerisation stage, the addition of at least one additional monomer component, selected from alkyl (meth)acrylates, preferably including methyl methacrylate, and/or at least one additional prepolymer composition Z2 prepared by polymerisation of alkyl (meth)acrylate, preferably including methyl methacrylate, as described above for the first reaction stage.

Furthermore, it is possible to use the prepolymer composition Z1 as sole monomer component in the second polymerisation stage (i.e. without addition of an additional monomer component).

Typically, at least on additive as described above, preferably not representing a particulate additive, may be added to the second reaction mixture M2, for example selected from crosslinking agents, stabilizers, chain transfer agents, regulators , release agents, organic dyes and impact modifiers.

Typically, the second polymerisation in step c) is stated by increasing the temperature, for example up to a temperature in the range of 50 °C to 150 °C. This may be carried out by placing the predefined form filled with the second reaction mixture M2 into a water bath and/or an oven, e.g. a circulating air oven, for a suitable period, e.g. for 1 to 10 hours. This polymerisation may also carried out using two or more steps defined by temperature and time.

After polymerisation in second polymerisation stage the semi-finished product is typically removed from the predefined form and may optionally be treated in a post polymerisation step (e.g. by increased temperature).

Typically the weight averaged molecular weight M_{w} of the polymer obtained in the second polymerization stage c) is at least 750,000 g/mol, preferably at least 1,000,000 g/mol, particular preferred at least 1,500,000 g/mol, and especially preferred 750,000 g/mol to 6,000,000 g/mol. Generally, the weight-average molar mass M_{w} of the employed polyalkyl(meth)acrylates can be determined by means of gel permeation chromatography (GPC) with reference to PMMA as a calibration standard, and THF as an eluent.

### Properties of the semi-finished products

In one aspect, the present invention is directed to the semi-finished product based on polyalkyl(meth)acrylate, preferably the semi-finished product based on polymethylmethacrylate (PMMA) which is obtainable (or obtained) by the inventive process as described above.

The features and preferred embodiment as described for the inventive process apply correspondingly to the inventive semi-finished product.

It was found that in the inventive process the coagulation of the particulate additive, e.g. the particulate IR absorber, in the on polyalkyl(meth)acrylate matrix is avoided and the particulate additive is homogenously and finely dispersed in the polymer matrix. Thus, the transparency of the polymer material is not adversely effected and the obtained semi-finished product exhibits a lower haze, i.e. of less than 1.5 %, preferably less than 1.0 %, and higher IR absorption, i.e. of more than 40 %, preferably more than 45 %, compared to semi-finished products prepared according to the state of the art where the particulate additive is added during or after the first polymerisation stage, e.g. in the second polymerization stage.

Preferably, the at least one particulate additive, more preferably the at least one particulate IR absorber, is homogenously distributed in the polyalkyl(meth)acrylate matrix of the semi-finished product resulting in a haze value of ≤ 1.5 %, preferably ≤ 1.0 % measured at ambient temperature (23°C) according to ISO 14782 on specimens having a thickness of 3 mm and/or resulting in an IR absorption of ≥ 40 %, preferably ≥ 45 %, measured at 1000 nm and ambient temperature (23°C) according to ISO 14782 on specimens having a thickness of 3 mm.

Preferably, the inventive semi-finished product based on polyalkyl(meth)acrylate, preferably the semi-finished product based on PMMA, has a haze of ≤ 1.5 %, preferably ≤ 1.0 % measured at ambient temperature (23°C) according to ISO 14782 on specimens having a thickness of 3 mm.

Preferably, the inventive semi-finished product based on polyalkyl(meth)acrylate, preferably the semi-finished product based on PMMA, has an IR absorption of ≥ 40 %, preferably ≥ 45 %, (referring to transmission of ≤ 60 %, preferably ≤ 55 %,) measured at 1000 nm and ambient temperature (23°C) according to ISO 14782 on specimens having a thickness of 3 mm.

Preferably, the semi-finished product is based on polyalkyl(meth)acrylate, preferably on PMMA, having a weight averaged molecular weight M_{w} of at least 750.000 g/mol, preferably at least 1.000.000 g/mol, particular preferred at least 1.500.000 g/mol, and especially preferred 750,000 g/mol to 6,000,000 g/mol, measured by means of gel permeation chromatography (GPC) with reference to PMMA as a calibration standard and THF as an eluent.

In a preferred embodiment, the semi-finished product is based on polymethylmethacrylate, which have an average molar weight M_{w} in the range from 750,000 g/mol to 6,000,000 g/mol and is composed of units derived from
(I) from 50.0 wt.-% to 100.0 wt.-%, preferably 80.0 wt.-% to 99.9 wt.-%, of methyl methacrylate,
(II) from 0.0 wt.-% to 10.0 wt.-% of monomers co-polymerizable with methyl methacrylate, preferably selected from unsaturated carboxylic acids, each based on the total weight of the polymethylmethacrylate.

Preferably, the inventive semi-finished product can be used as material in aircraft or automotive construction, more preferably as glazing in the aviation sector, for example as glazing, especially cockpit glazing, in aircrafts, helicopters, gliders or airtaxis.

### Examples

### 1. Preparation of semi-finished products (sheets)

Sheets having a thickness of 3 mm and a predefined amount of IR absorber of 0.2 wt.-%, based on the IR absorber products A or B and based on the total weight of the sheet, were prepared. For this a partly polymerized polymer sirup (prepolymer composition Z1) were prepared by radical polymerisation of methyl methacrylate (MMA) and optionally methacrylic acid as a co-monomer in a stirred tank reactor and said prepolymer composition Z1 were subsequently processed into PMMA sheets (semi-finished products).

The IR absorber was incorporated via different methods as described below in Examples 1 to 5.

### 1.1 Materials

MMA methyl methacrylate
MAA methacrylic acid
IR Absorber A CsₓWO₃ (x=0,2-0.35) in PMMA
IR Absorber B CsₓWO₃ (x=0.2-0.35) in tripropylene glycol diacrylate (TPGDA)

### 1.2 General procedure first polymerisation stage

The prepolymer composition Z1 was prepared as described in the following.

The first reaction mixture was prepared by mixing 2 L MMA and optionally MAA (see Example 1B) with an radical initiator (AIBN). The desired amounts of particulate IR absorber A or B were added according to inventive Examples 2-5. 1 L of said first reaction mixture were placed in a tempered stirred tank reactor and 1 L was used as continuous feed into the reactor during polymerisation. The polymerisation reactor was held under nitrogen inert gas atmosphere. After starting polymerisation reaction at a temperature of about 75 °C the addition 1 L MMA feed (part of the first reaction mixture) having a temperature of about 20 °C was dropwise added into the reactor so that the reaction temperature was preferably under 83 °C.

After addition of MMA feed was completed, the polymerization was stopped by cooling the reaction mixture to ambient temperature. The viscosity of the prepolymer composition obtained was in the range of 350 to 640 mPas (determined via rotational viscometer ROTAVISC me-vi from IKA).

The molecular weight and molecular weight distribution of the prepolymer compositions Z1 according to Examples 1A and 1B (comparative) and Examples 2-5 (inventive) were determined via gel permeation chromatography (GPC) as described below (see point 3. Test Methods). The molecular weights and the weight distributions were nearly identical for all Examples 1-5. For the numerical mean Mₙ, an average of all samples is 97,178 g/mol with a standard deviation σ = 2,952 g/mol. The mean mass mean M_{w} of all samples is 221,500 g/mol with a standard deviation σ of 13,037 g/mol.

### 1.3 General procedure second polymerisation stage

The sheet (semi-finished product) was prepared by curing of prepolymer compositions Z1 obtained after cooling the reaction mixture after first polymerisation stage in a predefined form as described in the following.

The second polymerisation mixture M2 was prepared by homogenous mixing of the prepolymer composition Z1 obtained in the first polymerization stage with an peroxo radical initiator and stabilizers (UV stabilizer and thermo-stabilizer) at ambient temperature. If appropriate, particulate IR absorber A were added to the second reaction mixture M2 in Examples 1A and 1B. According to masterbatch procedure in Examples 4 and 5 additional prepolymer composition comprising MMA/PMMA without any particulate additive was added so the reaction mixture M2 exhibits same concentration of particulate IR absorber as in Examples 1A and 2. The homogenized second reaction mixture M2 was degassed in vacuum so that residual gaseous materials, such as air, was degassed.

After homogenisation and degassing the second reaction mixture was introduced into a predefined form (reaction chamber) which was build up by two glass plates (400 mm x 400 mm), which were separated by a sealing tape with a thickness of 3 mm. The thickness-defining sealing tape was placed close to the contour on one edge of the glass plates and the glass plates were joined together. The glass plates were fixed via spring clips. In order to enable the filling of the reaction chamber only three edges were initially covered with the sealing rubber and clamped.

The homogenized and degassed second reaction mixture M2 was filled into the reaction chamber. Afterwards the last edge of the glass plates were closed with sealing rubber and clamped.

The closed reaction chamber was inserted into a water bath, which was tempered to 50 ° C. Air bubbles were allowed into the water bath via air inlet to optimize the convective heat transfer between the glass plates and the water. After about three hours, the reaction chamber was removed from the water bath, the spring clamps were removed and the glass plates with pre-cured PMMA plate were placed in the tempering furnace. Here, the post-polymerization was carried out at 120° C for two hours. Subsequently, the reaction chamber was removed and the finished PMMA plate could be removed from the glass for subsequent steps such as sampling.

### Examples 1A and 1B (comparative)

The prepolymer composition Z1 was prepared as described above under point 1.2. The first polymerisation mixture M1 comprised 100.0 wt.-% MMA in Example 1A or 99.8 wt. MMA / 0.2 wt.-% MAA in Example 1B, each based on total amount of monomers.

PMMA sheets was carried out via second polymerisation step as described above under point 1.3. The second reaction mixture M2 of Examples 1A and 1B were prepared by homogenous mixing of the respective prepolymer composition Z1, initiator and IR absorber A so that an concentration of 0.2 wt.-% of IR absorber A, based on the total second reaction mixture, was obtained.

### Examples 2 and 3 (inventive)

The prepolymer composition Z1 was prepared as described above under point 1.2. The first polymerisation mixture M1 comprised 100.0 wt.-% MMA, based on total amount of monomers. In Example 2, 0.2 wt.-% of IR absorber A, based on the total amount of the first polymerisation mixture M1, was added to first reaction mixture before polymerisation. In Example 3, 0.2 wt.-% of IR absorber B, based on the total amount of the first polymerisation mixture M1, was added to first reaction mixture before polymerisation.

PMMA sheets were prepared as described above under point 1.3, wherein the second polymerisation mixtures M2 were prepared by homogenous mixing of the respective prepolymer compositions Z1 with initiator and chain transfer agent and without addition of any particulate additive.

### Examples 4 and 5 (inventive) / masterbatch procedure

The prepolymer composition Z1 was prepared as described above under point 1.2. The first polymerisation mixture M1 comprised 100.0 wt.-% MMA, based on total amount of monomers. In Example 4, 10-fold amount (compared to Example 2) of IR absorber A was added to first reaction mixture before polymerisation. In Example 5, 36-fold amount (compared to Example 2) of IR absorber A was added to first reaction mixture before polymerisation.

PMMA sheets were prepared as described above under point 1.3, wherein the second polymerisation mixtures M2 were prepared by homogenous mixing of the respective prepolymer compositions Z1, initiator, and additional prepolymer composition Z2, which was the prepolymer composition as obtained in first reaction stage of Example 1 (without addition of IR absorber). The amount of additional prepolymer composition Z2 was selected so that the resulting second reaction mixture had a concentration of 0,2 wt.-%, based on the second reaction mixture, of IR absorber A. No additional particulate additive was added to second reaction mixture M2.

### 2. Experimental Results

The PMMA sheets prepared according to comparative Examples 1A (100 MMA) and 1B (99.8 MMA/ 0.2 MAA) showed significant high haze. Haze could already be detected optically with bare eyes when the IR absorber A was added to the prepolymer composition Z1. Said haze did not visibly decrease during the second stage polymerization when producing the PMMA sheet in a predefined form. The inventive Examples 2 and 3 in which the IR absorbers A or B have been incorporated into the prepolymer during the first polymerisation stage showed a significantly lower haze which was almost unrecognizable with bare eyes. The same applies to PMMA sheets of Examples 4 and 5, which were prepared using a masterbatch.

Typically, the requirements for transparent PMMA including IR absorber sheets were haze of <1.5 %, preferably ≤ 1.0 % and IR absorption at 1000 nm of > 45 %, preferably > 50 %, more preferably > 60 %.

The optical properties (haze and transmission spectra) as well as the molecular weight of the prepolymer compositions Z1 were determined as described below (point 3). The results are summarized in Table 1 below. The homogenous distribution of the particulate additive in the prepolymer composition Z1 was confirmed via light scattering (DLS).

**Table 1: Experimental results for Examples 1A, 1B, and 2-5**

| Ex. | IR absorber | Addition of IR absorber | Haze | IR-Absorption at 1000 nm | Transmission at 400 nm | M_{w} prepolymer composition Z |
|---|---|---|---|---|---|---|
| | | | % | [%] | [%] | g/mol |
| 1A* | A | stage 2 | 9 | 34 | 70 | 221,000 |
| 1B* | A | stage 2 | 9 | 40 | 67 | 216,000 |
| 2 | A | stage 1 | 0.6 | 56 | 81 | 229,000 |
| 3 | B | stage 1 | 1.6 | 48 | 80 | 211,000 |
| 4 | A | stage 1, masterbatch 10 | 0.9 | 52 | 82 | - |
| 5 | A | stage 1, masterbatch 36 | 1.0 | 55 | 80 | - |

| | | | | | | |
|---|---|---|---|---|---|---|
| *Comparative example | | | | | | |

In summary, the inventive examples 2, 4 and 5 using IR absorber A (direct prepolymer composition by in situ polymerisation or as masterbatch) showed the highest IR absorption combined with the highest transparency (lowest haze). It was further demonstrated, that the IR absorber B (formulated as dispersion in in tripropylene glycol diacrylate) can advantageously be incorporated as well using the inventive process.

In PMMA sheets prepared via the process according to the state of the art (examples 1A and 1 B) the incorporation of IR absorber led to significant haze. This haze was also observed if methacrylic acid (MAA) is used as a comonomer in order to increase polar linking groups for the IR absorber (example 1B).

The transmission spectra confirmed that the sheets according to inventive examples 2-5 show the highest absorption in IR range and highest transmission in the visible spectral range.

### 3. Test methods

### 3.1 Viscosity of the prepolymer compositions Z

The viscosities of the prepolymer compositions Z1 were determined using a rotational viscometer of the type ROTAVISC me-vi from the manufacturer IKA. About 7 ml of the prepolymer composition Z1 was poured into the measuring cylinder. After calibration of the device, the volumetric flask is attached and inserted into the measuring cylinder wherein the volumetric flask should be completely covered by the prepolymer composition. By adjusting the speed, the torque can be adjusted until it is in a range of 95% to 99%. A thermocouple records the temperature of the polymer and the viscometer calculates the torque-dependent viscosity. The viscosity was determined at 20 °C

### 3.2 Molecular weight of prepolymer compositions Z

The molecular weight (numerical mean Mn; mass mean Mw, and molecular weight distribution) was determined via gel permeation chromatography (GPC) using PMMA as standard and the following parameters: Flow rate : 1 ml/min; Eluent: tetrahydrofuran THF Li + 0,2 Vol% TFA (trifluoroacetic acid); Injection volume: 100 µL.

### 3.3 Optical properties

The transmission of sample sheets of 40 mm x 60 mm, prepared from the PMMA sheets as described above, were determined using UV/VIS Spektrometer Lambda 12 from Perkin Elmer, based on standard ISO 13468.

The haze values of the sample sheets (sheets prepared as described above) were determined using haze-gard plus from Gardner, based on standard ISO 14782. Haze values were determined on several positions on the sheet.

## Claims

1. Process for producing a semi-finished product based on polyalkyl(meth)acrylate comprising
a. first polymerization stage, wherein a first reaction mixture M1 comprising
i. at least one alkyl (meth)acrylate;
ii. at least one particulate additive, wherein the particulate additive is dispersed in the first reaction mixture M1;
iii. at least one radical initiator; and
iv. optional additional additives;
is polymerised;
b. stopping polymerisation reaction of first polymerization stage, wherein a prepolymer composition Z1 is obtained;
c. second polymerization stage, wherein a second reaction mixture M2 comprising
i. the prepolymer composition Z1 obtained in step b;
ii. at least one initiator;
iii. optionally at least one additional monomer component, selected additional monomers and/or additional prepolymer composition; and
iv. optional additional additives;
is polymerised in a predefined form, wherein the semi-finished product based on polyalkyl(meth)acrylate is obtained.

2. Process according to Claim 1, **characterized in that** the semi-finished product is based on polymethylmethacrylate wherein the polymethylmethacrylate is build up by at least 80 wt.-%, preferably at least 90 wt.-%, based on the polymethylmethacrylate, of methyl methacrylate monomer units, and the polymethylmethacrylate has a weigh average molecular mass M_{w} of at least 750.000 g/mol.

3. Process according to Claim 1 or 2, **characterized in that** the semi-finished product is selected from sheets having a thickness in the range of from 1.5 mm to 100 mm, preferred from 2 mm to 80 mm, more preferred from 5 to 55 mm.

4. Process according to any of Claims 1 to 3, **characterized in that** the first reaction mixture M1 comprises as monomers i), each based on the total weight of monomers i) in M1:
(I) from 50.0 wt.-% to 100.0 wt.-%, preferably 80.0 wt.-% to 100.0 wt.-%, of methyl methacrylate,
(II) from 0.0 wt.-% to 50.0 wt.-% preferably 0.0 wt.-% to 20 wt.-%, of monomers co-polymerizable with the methyl methacrylate, preferably selected from C₁-C₁₂ alkyl (meth)acrylate different from methyl methacrylate, unsaturated carboxylic acids, and vinyl aromatic monomers; more preferably selected from unsaturated carboxylic acids.

5. Process according to any of Claims 1 to 4, **characterized in that** the particulate additive is selected from IR absorbers, scattering particles, and pigments

6. Process according to any of Claims 1 to 5, **characterized in that** the first reaction mixture M1 comprises, each based on the total weight of first reaction mixture M1:
i. 69.9999 to 99.998 wt.-%, preferably 79.9999 to 99.9899 wt.-%, more preferably 89.9999 to 99.8999 wt.% of at least one alkyl (meth)acrylate, preferably selected from C1-C6 alkyl (meth)acrylate, more preferably methyl(meth)acrylate; optionally 0.0 to 20.0 wt.-%, preferably 0.0 to 10.0 wt.-%, of at least one co-polymerizable monomer, for example selected from (meth)acrylic acid;
ii. 0.0001 to 29.0 wt.-%, preferably 0.01 to 20.0 wt.-%, more preferably 0.1 to 10.0 wt.-% of at least one particulate additive, preferably selected from IR absorbers, scattering particles, and pigments, wherein the particulate additive is dispersed in the first reaction mixture M1, and
iii. 0.0001 to 0.1 wt.-% (1 to 1,000 ppm) of at least one radical initiator; and
iv. 0 to 25 wt.%, preferably 0 to 10 wt.-%, of optional additional additives.

7. Process according to any of Claims 1 to 6, **characterized in that** the particulate additive comprises at least one IR absorber selected from tungsten bronzes represented by the general formula MₓWO₃, with M is a metal selected from alkali metals, alkaline earth metals or rare earth metals, preferably caesium; and x is any real number from 0.001 to 1.0000, more preferably from 0.01 to 0.5, also preferably from 0.2 to 0.4, most preferably from 0.2 to 0.35.

8. Process according to any of Claims 1 to 7, **characterized in that** the first reaction mixture M1 comprises 0.001 wt.-% to 2.0 wt.-%, preferably 0.01 wt.-% to 2.0 wt.-%, more preferably 0.01 wt.-% to 0.5 wt.-%, based on the total weight of first reaction mixture M1, of at least one IR absorber as particular additive, selected from caesium tungsten bronzes CsₓWO₃ with x is from 0.001 to 1.000, calculated as solid content of caesium tungsten bronze.

9. Process according to any of Claims 1 to 7, **characterized in that** the first reaction mixture M1 comprises 0.01 wt.-% to 20.0 wt.-%, preferably 0.02 wt.-% to 10.0 wt.-%, more preferably 0.1 wt.-% to 8.0 wt.-%, based on the total weight of first reaction mixture M1, of at least one IR absorber as particular additive, selected from caesium tungsten bronzes CsₓWO₃ with x is from 0.001 to 1.000, calculated as solid content of caesium tungsten bronze; and at least one additional monomer component is added to the second reaction mixture M2, wherein the additional monomer component is selected from alkyl (meth)acrylate and/or at least one additional prepolymer composition Z2, which is obtained by polymerisation of at least one alkyl (meth)acrylate.

10. Process according to any of Claims 1 to 9, **characterized in that** the polymerisation reaction of first polymerization stage is stopped by cooling the reaction mixture and/or by adding at least one polymerisation inhibitor to the reaction mixture.

11. Process according to any of Claims 1 to 10, **characterized in that** the second reaction mixture M2 is filed into a predefined form, which is build up by at least two glass plates, which are separated by a sealing tape defining the thickness of the sheet obtained as semi-finished product.

12. Process according to any of Claims 1 to 11, **characterized in that** the polyalkyl(meth)acrylate semi-finished products comprises, each based on the total weight of the semi-finished product, from 30.0 wt.-% to 99.999 wt.-%, preferably from 50.0 wt.-% to 99.99 wt.-%, more preferably from 90.0 wt.-% to 99.999 wt.-%, of the polyalkyl(meth)acrylate, preferably of polymethylmethacrylate, and from 0.001 wt.-% to 2.0 wt.-%, preferably 0.01 wt.-% to 2.0 wt.-%, more preferably 0.01 wt.-% to 0.5 wt.-% of at least one IR absorber as particulate additive, selected from caesium tungsten bronzes CsₓWO₃ with x is from 0.001 to 1.000 and calculated based on the solid content of the caesium tungsten bronze.

13. Semi-finished product obtainable by a process according to any of claims 1 to 12.

14. Semi-finished product according to claim 13, **characterized in that** the semi-finished product has a haze of ≤ 1.5 %, preferably ≤ 1.0 % measured at ambient temperature according to ISO 14782 on specimens having a thickness of 3 mm and/or an IR absorption of ≥ 40 %, preferably ≥ 45 %, measured at 1000 nm and ambient temperature according to ISO 14782 on specimens having a thickness of 3 mm.
